# EUROPEAN PATENT SPECIFICATION

(11) **EP 1 857 307 B1**
(45) Date of publication and mention of the grant of the patent: **26.11.2008**
(21) Application number: 06425333.9
(22) Date of filing: 16.05.2006
(51) Int. Cl.: B60H 1/00

(54) **Air-conditioning assembly for vehicles**
Klimaanlage für Kraftfahrzeuge
Climatisation pour véhicules

(43) Date of publication of application: 21.11.2007
(73) Proprietor: DENSO THERMAL SYSTEMS S.p.A., 10046 Poirino (Torino) (IT)
(72) Inventor: Ferrarese, Claudio c/o Denso Thermal Systems Spa, 10046 Poirino (Torino) (IT)
(74) Representative: Marchitelli, Mauro

(56) References cited:
- DE-C1- 19 524 200
- FR-A- 2 773 111
- FR-A- 2 794 070
- US-A- 5 701 949

## Description

The present invention relates to an air conditioning assembly for vehicles according to the preamble to claim 1.

Air conditioning assemblies for vehicles comprise a housing which defines a cooling chamber, a heating chamber, and a mixing chamber. In the housing are defined a first passage which puts the heating chamber in communication with the mixing chamber, a second passage which puts the cooling chamber in communication with the mixing chamber and a third passage that puts the cooling chamber in communication with the heating chamber. Known air conditioning assemblies are normally provided with a first closing device able selectively to open and close the first passage and a second closing device able selectively to open and close the second and the third passage.

The first and the second closing device are usually connected to each other in such a way that the condition of complete opening of the first passage corresponds to the position of complete closure of the second passage and of complete opening of the third passage, whilst the position of complete closure of the first passage corresponds to the position of complete opening of the second passage and of complete closure of the third passage.

In a known solution used by the same Applicant, the second closing device comprises a lever having a first end articulated to the housing and a door having a first end slidable along a guide of the case situated at the third passage and a second end portion articulated to a second end of the lever.

In FR 2 794 070, which is considered as the closest prior art, as well as in other known solutions, at the time of the opening of the passage that puts the cooling chamber in communication with the mixing chamber, a streak of cold air tends to be formed, which tends to move towards the distribution channels without mixing with the flow of hot air coming from the heating chamber.

To overcome this drawback, it has already been proposed to delay the time when the opening of the second passage takes place. In practice, the closing device associated to the second passage (the one that puts in communication the cooling chamber with the mixing chamber) in the initial phase of its opening travel keeps closed, for a predetermined time interval, the air communication passage between the cooling chamber and the mixing chamber.

In known solutions, this function is performed providing an auxiliary closing surface which co-operates with an edge of the second passage. The drawback of known solutions is that said auxiliary closing surface creates a narrowing of the working section of the second passage in the fully opened position of the second passage.

The object of the present invention is to provide an air conditioning assembly of the type defined above, that allows to overcome said drawback.

According to the present invention, said object is achieved by an air conditioning assembly having the characteristics set out in claim 1.

The characteristics and the advantages of the present invention shall become readily apparent in the detailed description that follows, provided purely by way of non limiting example, with reference to the accompanying drawings, in which:
- Figure 1 is a schematic section of an air conditioning assembly according to the present invention,
- Figure 2 is an enlarged scale schematic section of the part indicated by the arrow II in Figure 1, and
- Figures 3, 4, 5 are sections showing different operating positions of the air conditioning assembly according to the present invention.

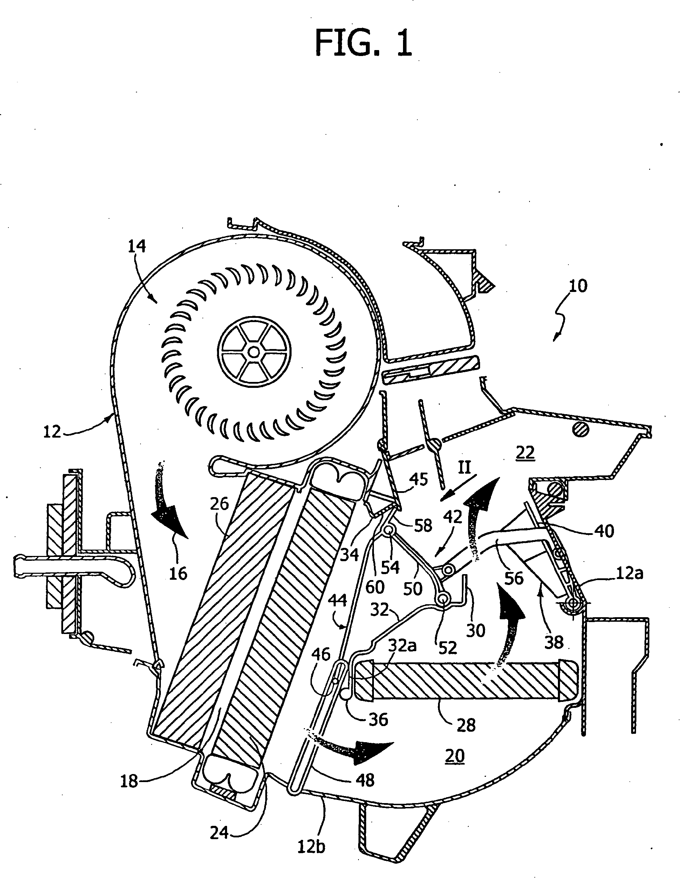

With reference to Figure 1, the number 10 designates an air conditioning assembly for vehicles according to the present invention. The assembly 10 comprises an outer housing 12 of injection-moulded plastic material.

The assembly 10 comprises a ventilator including a centrifugal fan 14 rotatable around an axis that is orthogonal to the plane of representation of Figure 1 to produce a flow of air in the direction indicated by the arrow 16 in Figure 1.

Inside the housing 12 of the air conditioning assembly 10 are defined a cooling chamber 18, a heating chamber 20 and a mixing chamber 22. In the cooling chamber 18 is housed an evaporator 24 upstream of which is preferably positioned a filter 26. In the heating chamber 20 is housed a heating radiator 28.

The heating chamber 20 communicates with the mixing chamber 22 through a first passage 30. The passage 30 is defined between a portion 12a of the outer wall of the case 12 and a stationary inner chamber 32 having a portion 32a serving the purpose of sustaining a side of the heating radiator 28.

The cooling chamber 18 communicates with the distribution chamber 22 through a second passage 34 and with the heating chamber 20 through a third passage 36. The second passage 34 is delimited superiorly by a fixed wall 45 adjacent to the upper seat of the evaporator 24 and inferiorly by the upper edge of the wall 32. The third passage 36 is delimited superiorly by the lower edge of the fixed wall 32 and inferiorly by a portion 12b of the outer case 12.

A first closing device 38 is associated to the first passage 30. The first closing device 38 comprises a first mixing door 40 articulated to the portion 12a of the case 12 around an axis that is orthogonal to the plane of representation of Figure 1.

A second closing device 42 is associated to the passages 34 and 36. The second closing device 42 comprises a second mixing door 44. A lower end 46 of the second mixing door 44 slidably engages a guide situated at the third passage 36. The guide 48 comprises two grooves 48 positioned laterally relative to the passage 36, in which engage the lateral ends 46 of the second mixing door 44.

The second closing device 42 comprises a lever 50 having a first end 52 articulated to the wall 32 and a second end 54 articulated to an upper end portion of the second mixing door 44.

The first mixing door 40 and the lever 50 are mutually connected by means of a tie rod 56 whose ends are articulated to the mixing door 40 and to the lever 50 around mutually parallel axes. The tie rod 56 establishes an operating connection between the positions of the two closing devices 38, 42.

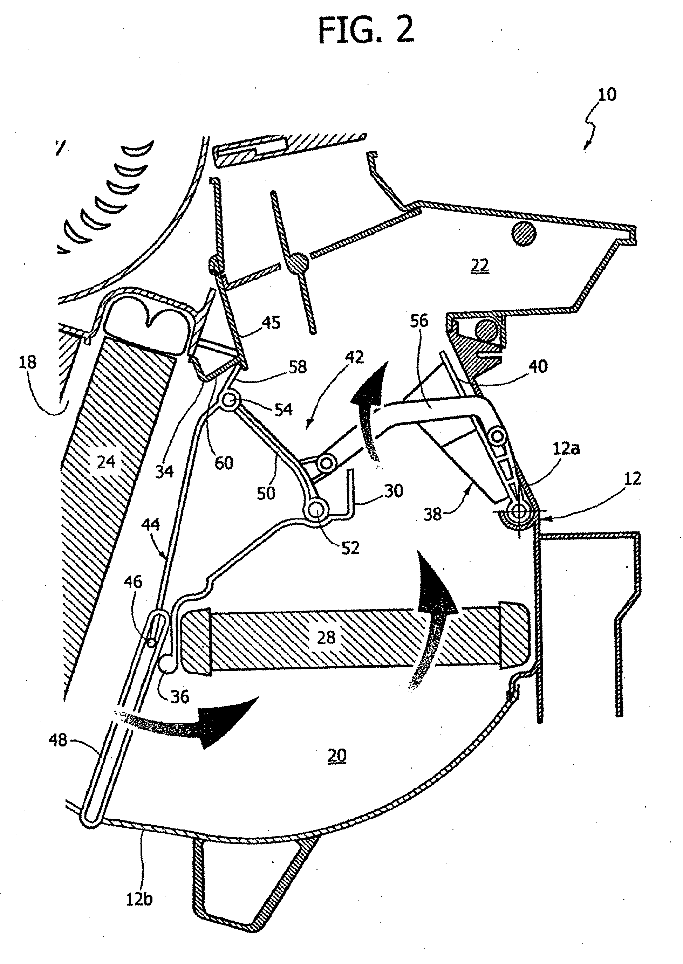

With reference to Figure 2, the second distribution door 44 has an integral extension 58 which extends beyond the articulation region 54 between the door 44 and the lever 50. The extension 58 co-operates with an extended closing surface 60 of the wall 45, which defines the upper edge of the passage 34. The extended surface 60 forms an extended region of closure of the passage 34. The passage 34 remains close until the outer edge of the appendix 58 is in contact with the surface 60. This determines a delay in the opening of the passage 34 relative to the fully opened position of the first passage 30, which corresponds to the position from which the opening motion of the second mixing door 34 starts.

Figures 1 and 2 show a first operative position of the air conditioning assembly according to the present invention. In this position, the first passage 30 is in a fully open position, the second passage 34 is in fully closed position and the third passage 36 is in fully open position. In this operative condition, the entire flow of air passes through the evaporator 24 and enters the heating chamber 20. The flow of air traverses the heating radiator 28 and reaches the mixing chamber 22 passing through the first passage 30, as indicated by the arrows.

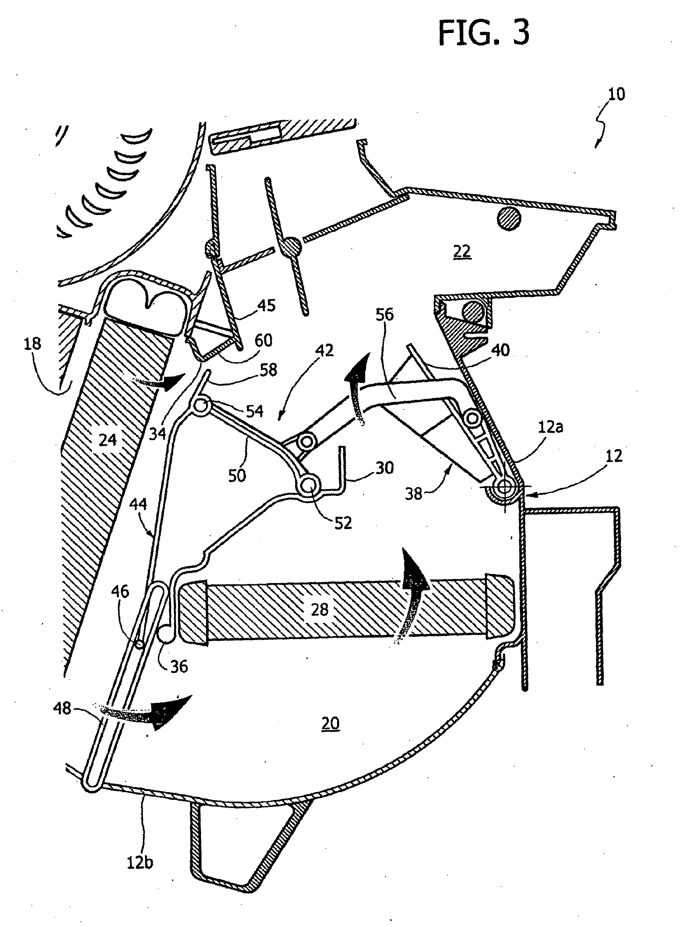

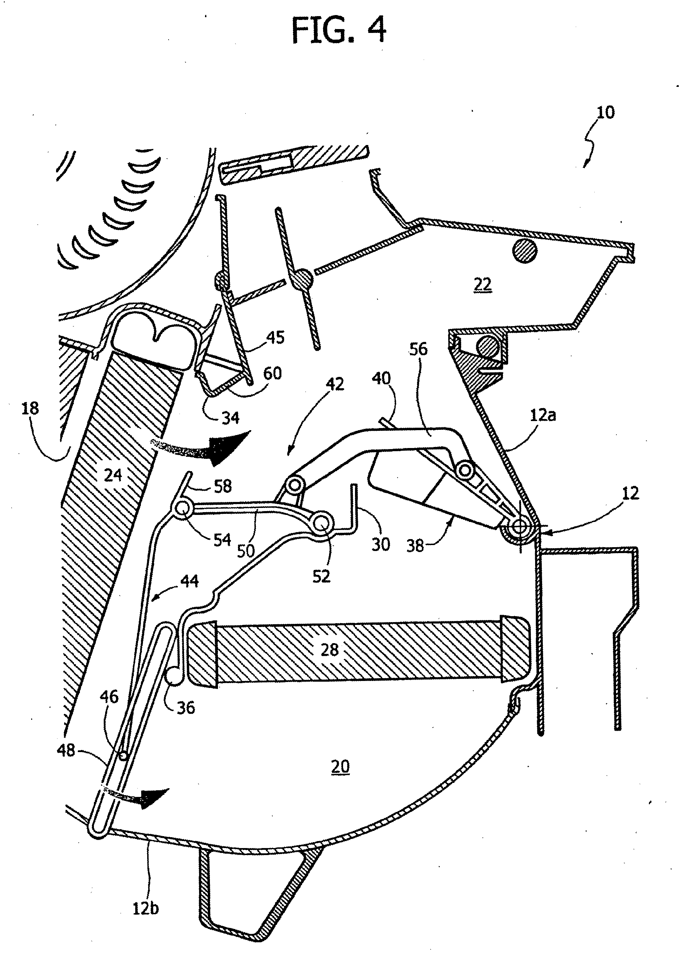

The two closing devices 38, 42 are controlled starting from a single control member (not shown) which enables to select the position of the lever 50 or of the first mixing door 40. Acting on said control, the operative position of both mixing doors 40, 44 is varied. Figure 3 shows the position in which the opening of the second passage 34 starts. The delay in the opening of the second passage 34 causes the second passage 34 to start opening only after a partial closure of the first passage 30. This allows to prevent the failure to mix a streak of cold air with the hot flow coming from the heating chamber 20. Figure 4 shows a position in which the second passage 34 is partially open and the first passage 30 is almost completely closed.

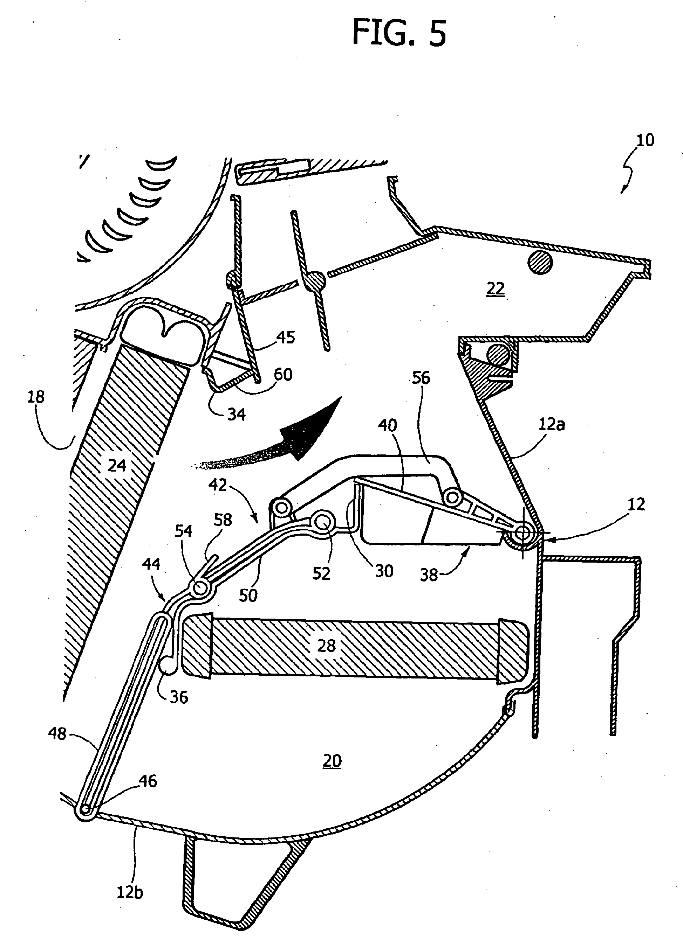

Lastly, Figure 5 shows the position in which the first passage 30 is fully closed and the second passage 34 is fully open. In this position, the second mixing door 44 fully closes the third passage 36. The first mixing door 40 fully closes the first passage 30. The heating chamber 20 is thus completely isolated from the cooling chamber 18 and from the mixing chamber 22. This is the condition that enables to obtain the maximum cooling of the air flow directed into the passenger compartment of the vehicle.

The shape of the second distribution door 44, with extension 58 extending beyond the articulation 54 to the lever 50, is such that in the position of Figure 5 there is no substantial reduction of the area of the second passage 34 due to the presence of the extension 58. This represents an advantage with respect to known solutions, in which the elements that enables to obtain a delay in the opening of the passage 34 reduces the working section for the passage of the air flow in the fully open position of the passage 34. As shown in Figure 5, in the fully open position of the second passage 34, the extension 58 of the second mixing door 44 extends above the terminal portion of the lever 50 and it is substantially parallel to the wall 32 that inferiorly delimits the passage 34. The solution according to the present invention enables a minimum reduction of the working section of the passage 34 and, other conditions being equal, it enables to improve the cooling efficiency of the air conditioning assembly.

## Claims

1. Air conditioning assembly for vehicles, comprising:
- a housing (12) defining a cooling chamber (18), a heating chamber (20) and a mixing chamber (22),
- a first passage (30) which puts the heating chamber (20) in communication with the mixing chamber (22), a second passage (34) which puts the cooling chamber (18) in communication with the mixing chamber (22) and a third passage (36) that puts the cooling chamber (18) in communication with the heating chamber (20),
- a first closing device (38) able selectively to open and close said first passage (30),
- a second closing device (42) able selectively to open and close the second and the third passage (34, 36),
in which the first and the second closing device are connected to each other in such a way that the condition of complete opening of the first passage (30) corresponds to the position of complete opening of the third passage (36) and of complete closure of the second passage (34) and the position of complete closure of the first passage(30) corresponds to the position of complete opening of the second passage (34) and of complete closure of the third passage (36), and
in which the second closing device (42) comprises a lever (50) having a first end articulated around a fixed axis (52) and a mixing door (44) having a first end (46) slidable along a stationary guide (48) situated at the third passage (36) and a second end portion articulated to a second end (54) of the lever (50),
**characterised in that** the mixing door (44) has an integral extension (58) which extends beyond the articulation (54) between the door (44) and the lever (50) and that, in the position of complete closure of the second passage (34), it co-operates with an extended edge (60) of the second passage (34) to define a delay in the opening of the second passage (34) during the opening movement of the door (44).

2. Air conditioning assembly as claimed in claim 1, **characterised in that** said lever (50) is connected to a mixing door (40) of the first closing device (38) by means of an articulated tie rod (56).

3. Air conditioning assembly as claimed in claim 1, **characterised in that** in the fully open position of the second passage (34) the integral extension (58) of the mixing door (44) extends above an end portion of the lever (50).

## Patentansprüche

1. Klimatisierungsbaugruppe für Fahrzeuge, die umfasst:
- ein Gehäuse (12), das eine Kühlkammer (18), eine Heizkammer (20) und eine Mischkammer (22) aufweist,
- einen ersten Kanal (30), der die Heizkammer (20) mit der Mischkammer (22) verbindet, einen zweiten Kanal (34), der die Kühlkammer (18) mit der Mischkammer (22) verbindet, und einen dritten Kanal (36), der die Kühlkammer (18) mit der Heizkammer (20) verbindet,
- eine erste Schließeinrichtung (38), die den ersten Kanal (30) selektiv öffnen und schließen kann,
- eine zweite Schließeinrichtung (42), die den zweiten und den dritten Kanal (34, 36) selektiv öffnen und schließen kann,
wobei die erste und die zweite Schließeinrichtung so miteinander verbunden sind, dass der Zustand des vollständigen Öffnens des ersten Kanals (30) der Position des vollständigen Öffnens des dritten Kanals (36) und des vollständigen Schließens des zweiten Kanals (34) entspricht und die Position des vollständigen Schließens des ersten Kanals (30) der Position des vollständigen Öffnens des zweiten Kanals (34) und des vollständigen Schließens des dritten Kanals (36) entspricht, und
wobei die zweite Schließeinrichtung (42) einen Hebel (50), der ein erstes Ende hat, das um eine feststehende Achse (52) herum gelagert ist, und eine Mischklappe (44) umfasst, die ein erstes Ende (46), das an einer stationären Führung (48) entlang gleiten kann, die sich an dem dritten Kanal (36) befindet, sowie einen zweiten Endabschnitt hat, der an einem zweiten Ende (54) des Hebels (50) angelenkt ist,
**dadurch gekennzeichnet, dass** die Mischklappe (44) eine integrale Verlängerung (58) aufweist, die sich über die Gelenkverbindung (54) zwischen der Klappe (44) und dem Hebel 850) hinaus erstreckt, und **dadurch**, dass sie in der Position des vollständigen Schließens des zweiten Kanals (34) mit einem verlängerten Rand (60) des zweiten Kanals (34) zusammenwirkt, um eine Verzögerung beim Öffnen des zweiten Kanals (34) im Verlauf der Öffnungsbewegung der Klappe (44) zu bewirken.

2. Klimatisierungsbaugruppe nach Anspruch 1, **dadurch gekennzeichnet, dass** der Hebel (50) mit einer Mischklappe (40) der ersten Schließvorrichtung (38) mittels einer angelenkten Verbindungsstange (56) verbunden ist.

3. Klimatisierungsbaugruppe nach Anspruch 1, **dadurch gekennzeichnet, dass** sich die integrale Verlängerung (58) der Mischklappe (44) in der vollständig offenen Position des zweiten Kanals (34) oberhalb eines Endabschnitts des Hebels (50) erstreckt.

## Revendications

1. Climatisation pour véhicules, comprenant :
un boîtier (12) définissant une chambre de refroidissement (18), une chambre de chauffage (20) et une chambre de mélange (22),
un premier passage (30) qui met la chambre de chauffage (20) en communication avec la chambre de mélange (22), un deuxième passage (34) qui met la chambre de refroidissement (18) en communication avec la chambre de mélange (22) et un troisième passage (36) qui met la chambre de refroidissement (18) en communication avec la chambre de chauffage (20),
un premier dispositif de fermeture (38) pouvant ouvrir et fermer sélectivement ledit premier passage (30),
un second dispositif de fermeture (42) pouvant ouvrir et fermer le deuxième et le troisième passage (34, 36) sélectivement,
dans laquelle les premier et second dispositifs de fermeture sont raccordés entre eux de sorte que la condition d'ouverture totale du premier passage (30) correspond à la position d'ouverture totale du troisième passage (36) et de la fermeture totale du deuxième passage (34) et la position de fermeture totale du premier passage (30) correspond à la position d'ouverture totale du deuxième passage (34) et la fermeture totale du troisième passage (36), et
dans lequel le second dispositif de fermeture (42) comprend un levier (50) ayant une première extrémité articulée autour d'un axe fixe (52) et une porte de mélange (44) ayant une première extrémité (46) pouvant coulisser le long d'un guide fixe (48) situé au niveau du troisième passage (36) et une seconde partie d'extrémité articulée par rapport à la seconde extrémité (54) du levier (50),
**caractérisée en ce que** la porte de mélange (44) a une extension solidaire (58) qui s'étend au-delà de l'articulation (54) entre la porte (44) et le levier (50) et **en ce que** dans la position de fermeture totale du deuxième passage (34), il coopère avec un bord étendu (60) du second passage (34) pour définir un délai d'ouverture du deuxième passage (34) pendant le mouvement d'ouverture de la porte (44).

2. Climatisation selon la revendication 1, **caractérisée en ce que** ledit levier (50) est raccordé à une porte de mélange (40) du premier dispositif de fermeture (38) au moyen d'un tirant articulé (56).

3. Climatisation selon la revendication 1, **caractérisée en ce que** dans la position complètement ouverte du deuxième passage (34), l'extension solidaire (58) de la porte de mélange (44) s'étend au-delà d'une partie d'extrémité du levier (50).
